# EUROPÄISCHE PATENTSCHRIFT

(11) **EP 3 106 008 B1**
(45) Veröffentlichungstag und Bekanntmachung des Hinweises auf die Patenterteilung: **27.10.2021**
(21) Anmeldenummer: 16001299.3
(22) Anmeldetag: 09.06.2016
(51) Int. Cl.: A01B 45/02, A01D 34/68, A01D 34/74

(54) **GARTENPFLEGEGERÄT IN FORM EINES VERTIKUTIERERS, EINES MULCHMÄHERS O. DGL. EINRICHTUNG**
GARDEN CARE APPARATUS IN THE FORM OF A SCARIFIER, A MULCHING MOWER AND SIMILAR DEVICE
APPAREIL DE JARDINAGE EN FORME DE SCARIFICATEUR, D'UNE TONDEUSE HACHEUSE OU DISPOSITIF SIMILAIRE

(30) Priorität: 19.06.2015 DE 102015109896
(43) Veröffentlichungstag der Anmeldung: 21.12.2016
(73) Patentinhaber: Tielbürger, Dirk, 32369 Rahden (DE)
(72) Erfinder: Tielbürger, Dirk, 32369 Rahden (DE)
(74) Vertreter: Deters, Frank

(56) Entgegenhaltungen:
- WO-A2-01/31992
- DE-A1-102006 006 689
- GB-A- 1 089 843
- US-A- 3 998 034

## Beschreibung

Die Erfindung betrifft ein Gartenpflegegerät in Form eines Vertikutierers o. dgl. motorbetriebene Einrichtungen gemäß dem Oberbegriff des Anspruchs 1.

Aus DE 43 39 623 C1 ist ein in Form eines Vertikutierers ausgebildetes Gartenpflegegerät bekannt, wobei nur eine Stützachse mit zwei Rädern ein den Antrieb und das Bearbeitungswerkzeug aufweisendes Gehäuse abstützt. Dabei ist vorlaufend dem Bearbeitungswerkzeug des von Hand geschobenen Systems eine auf dem Boden abstützbare Absenkeinrichtung vorgesehen. Diese Einrichtung wirkt mittels einer randseitigen Zugstange auf eine Kupplungseinheit im Bereich des Antriebsmotors, so dass über eine Kulissenführung am Ende der Zugstange eine Schwenkbewegung der Absenkeinrichtung zum Betätigen eines Spannrades genutzt werden kann. Mit dieser Verbindungskonstruktion wird eine Sicherungseinrichtung geschaffen, mit der die Eingriffsstellung bzw. die Entkupplungsstellung des Antriebs gesteuert wird. Sämtliche Bauteile dieser mechanischen Sicherung bilden dabei ein unter einer Abdeckhaube befindliches System mit verschleißbelasteten Bauteilen, so dass die Sicherungskontrolle durch den Bediener nicht möglich ist und die hohen Belastungen ausgesetzten Kulissenteile in der Langzeitstabilität Nachteile aufweisen.

Bei einer Rasenpflegemaschine gemäß DE 101 42 072 A1 kann die Höhe des Arbeitswerkzeugs über dem Erdboden durch einen Feststellmechanismus geändert werden. Dieser ist jedoch nur in mehreren alternativen Positionen lösbar, so dass damit eine gestufte Verstellung realisiert wird. Auch in US 4,336, 760 A ist eine Vorrichtung zur Erdbearbeitung gezeigt, bei der das Werkzeug im Bereich eines Stellhebels auf mehrere gestufte Arbeitslagen einstellbar ist. Die Lösung gemäß DE 10 2006 006 689 A1 sieht zur Positionsveränderung an einem Stützrad eine kombinierte Schraub-Schwenk-Mechanik vor, und auch US 4,923,016 A weist eine Schwenkmechanik mit gestuft verlagerbarem Stellhebel auf.

Eine gattungsgemäße Vorrichtung ist auch aus der Schrift WO 01/31992 A2 bekannt.

Die Erfindung befasst sich mit dem Problem, ein Gartenpflegegerät in Form eines Vertikutierers o. dgl. Einrichtung zu schaffen, dessen Gehäuseaufbau für die Anwendung variabler Bearbeitungswerkzeuge geeignet ist, dabei die Einstellung und Führung des Systems verbessert ist und der Bediener mit geringem Aufwand eine schnelle Änderung des Bodenabstandes des Werkzeuges durchführen kann.

Die Erfindung löst diese Aufgabe mit einem Gerät mit den Merkmalen des Anspruchs 1. Der Führungsschenkel der Einstellvorrichtung ist im Querschnitt mit einer Bogenkontur geformt, so dass entlang dieser Kontur eine entsprechende Voreinstellung möglich ist. Weitere vorteilhafte Ausgestaltungen ergeben sich aus den Ansprüchen 2 bis 10.

Das Gartenpflegegerät in Form eines Vertikutierers o. dgl. Einrichtung ist erfindungsgemäß als eine Zwei-Achs-Einheit ausgebildet, die eine vordere Stützeinheit mit einer ersten Radachse und ein hinteres Basisgehäuse mit einer zweiten Radachse aufweist. Diese beiden Bauteile sind im Bereich einer einer Teilungsebene zugeordneten Querachse so verbunden, dass die beiden Teilbereiche relativ zueinander verlagerbar sind. Eine erfindungsgemäße Verbesserung sieht vor, dass nunmehr mittels einer zwischen Basisgehäuse und vorderer Stützeinheit vorgesehenen Einstellvorrichtung ein jeweiliger, als Arbeitstiefe definierbarer Bodenabstand im Bereich des weitgehend zentral angeordneten Bearbeitungswerkzeuges verändert werden kann. Dabei ist vorgesehen, dass der Bodenabstand durch eine Verlagerung der vorderen Stützeinheit relativ zur gemeinsamen Querachse eingestellt wird.

Ausgehend von der "zweiteiligen" Grundkonstruktion des Gerätes wird die Veränderung des Bodenabstandes dadurch erreicht, dass die vordere Radachse in Bezug auf die bei Verlagerung um die Querachse gebildete Schwenkbahn der Stützeinheit tangential verschoben werden kann. Damit wird erreicht, dass die Arbeitstiefe auch stufenlos einstellbar ist. Denkbar ist auch, eine entsprechende Positionierung durch Rastverstellungen vorzunehmen.

Eine vorteilhafte Ausführung der Einstellvorrichtung sieht vor, dass diese im Bereich eines die vordere Radachse bildenden Querträgers mit einem zu diesem hin abragenden Führungsschenkel versehen wird. Der Führungsschenkel ist dabei einerseits ortsfest am Basisgehäuse gehalten, und andererseits weist der Führungsschenkel eine Führungsnut auf, die einen darin verschiebbar gehaltenen Tragstift aufnimmt. Dabei ist vorgesehen, dass der in die Führungsnut eingreifende Tragstift andererseits eine Durchlassöffnung im Querträger der Stützeinheit durchgreift und hier eine auch formschlüssige Stellverbindung vorgesehen sein kann.

Eine vorteilhaft einfache Ausführung sieht vor, dass die Stellverbindung als eine Schraubverstellung ausgebildet ist. Dabei kann der ein Gewinde aufweisende Tragstift in einer ortsfesten Gewindebohrung verlagert und damit eine Einstellbewegung ausgelöst werden.

Die konstruktive Umsetzung dieses Konzeptes sieht vor, dass der Tragstift im Bereich der im Führungsschenkel vorgesehenen Führungsnut eine Sicherungsmutter als Gleit- und Anschlagteil aufweist und dieser Teil mit der im Bereich der Durchlassöffnung vorgesehenen Gewindeverbindung zusammenwirkt. Damit wird erreicht, dass der Tragstift bei Betätigung eines endseitig frei zugänglichen Schraubstellers axial verlagerbar ist.

Eine vorteilhafte Ausführung des Gerätes kann auch vorsehen, dass zur Verstellung des Bodenabstandes im Bereich des Schraubverstellers ein motorischer Antrieb in das System integriert ist.

Weitere Einzelheiten und vorteilhafte Ausgestaltungen der Erfindung ergeben sich aus der nachfolgenden Beschreibung und der Zeichnung, in der ein Ausführungsbeispiel des erfindungsgemäßen Gartenpflegegerätes mit Einstellvorrichtung näher veranschaulicht ist. In der Zeichnung zeigen:
- Fig. 1: eine perspektivische Seitenansicht des Gerätes in Arbeitsstellung,
- Fig. 2: eine vergrößerte Ausschnittsdarstellung mit den Bauteilen des Gerätes in gesicherter Transportstellung, und
- Fig. 3: eine perspektivische Vorderansicht des Gerätes mit Sicherungseinrichtung und Einstellvorrichtung.

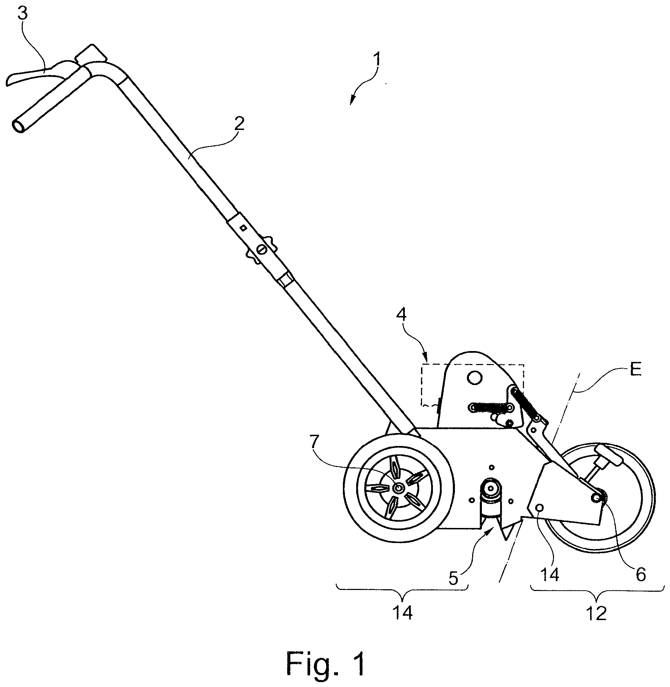

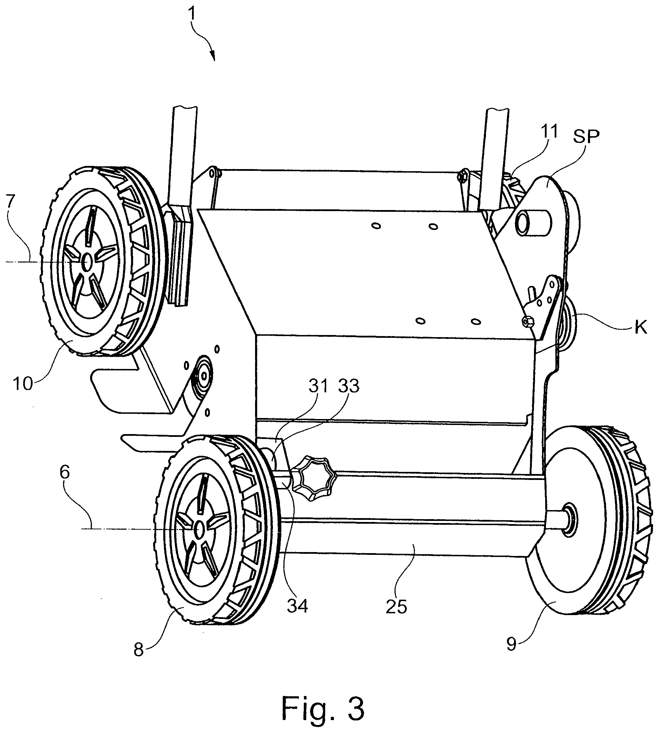

In Fig. 1 ist eine insgesamt mit 1 bezeichnete Einrichtung in Form eines Gartenpflegegerätes gezeigt, das als ein an sich bekannter Vertikutierer, Mulchmäher o. dgl. ausgeführt sein kann. Derartige Einrichtungen 1 sind von Hand bedienbar und weisen im Bereich eines oberen Führungsholms 2 jeweilige, zur Steuerung vorgesehene Stellhebel 3 auf. Dabei ist zumindest ein mittels eines schematisch dargestellten Motors 4 antreibbares Bearbeitungswerkzeug 5 in eine bodennahe Arbeitsstellung (bei B) bringbar. Durch Betätigung einer nicht näher dargestellten Kupplung (Fig. 3) kann das Bearbeitungswerkzeug 5 in entsprechende Rotation versetzt werden.

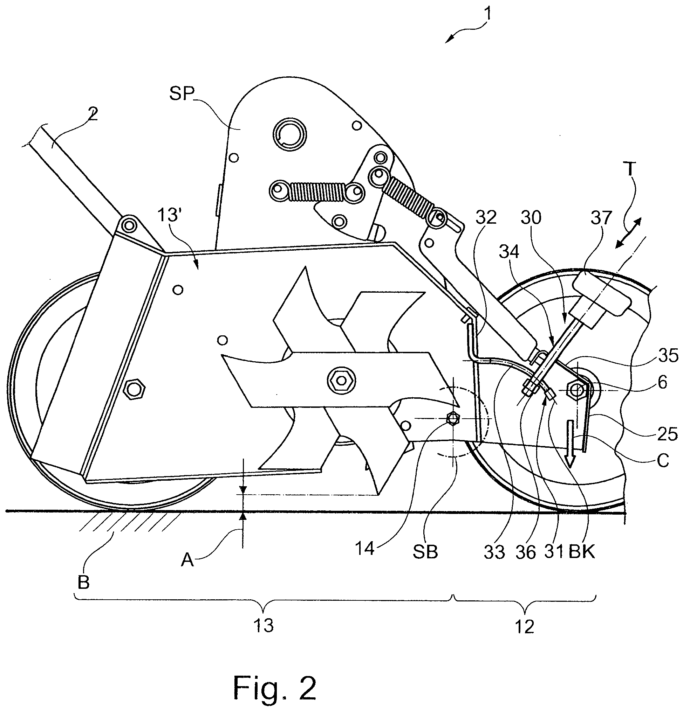

Die Einrichtung 1 ist dabei in Form einer zwei beabstandete Radachsen 6, 7 mit paarweisen Rädern 8, 9 und 10, 11 aufweisenden Rolleinrichtung ausgebildet. Diese Konstruktion geht von einer in einer Teilungsebene E geteilten Bauteilstruktur aus, wobei eine mit der ersten Radachse 6 versehene vordere Stützeinheit 12 relativ zu einem die zweite Radachse 7 sowie die Antriebsstruktur 4 aufweisenden Basisgehäuse 13 um eine gemeinsame Querachse 14 verlagerbar ist. Eine erfindungsgemäße Verbesserung dieser Doppel-Achsen-Rolleinrichtung sieht vor, dass zwischen Basisgehäuse 13 und vorderer Stützeinheit 12 eine Einstellvorrichtung 30 vorgesehen ist, mittels der ein jeweils als Arbeitstiefe definierbarer Bodenabstand A im Bereich des Bearbeitungswerkzeuges 5 veränderbar ist (Fig. 2).

Aus einer vergrößerten Einzeldarstellung der Systemkomponenten gemäß Fig. 2 wird deutlich, dass der Bodenabstand A vorteilhaft durch eine Verlagerung der vorderen Stützeinheit 12 relativ zur gemeinsamen Querachse 14 einstellbar ist. Diese Verlagerung ist durch einen senkrechten Richtungspfeil C im Bereich der vorderen Stützeinheit 12 verdeutlicht.

Der Aufbau der Verbindungskomponenten im Bereich zwischen Basiskörper 13 und Stützeinheit 12 ist vorteilhaft so ausgelegt, dass zur Veränderung des Bodenabstandes A die vordere Radachse 6 in Bezug auf die bei Verlagerung um die Querachse 14 gebildete Schwenkbahn (Linie SB) der Stützeinheit 12 tangential verschiebbar sein kann (Pfeil T). Das System ist dabei so ausgelegt, dass die Arbeitstiefe A im Wesentlichen stufenlos einstellbar ist.

Zur Ausführung der vorbeschriebenen Stellbewegung C bzw. T ist vorgesehen, dass die Einstellvorrichtung 30 im Bereich eines die vordere Radachse 6 bildenden Querträgers 25 (Fig. 3) mit einem als konturiertes Bauteil an der "Schwenkzone" E angepassten Führungsschenkel 31 versehen ist. Dieser ist einerseits ortsfest bei 32 am Basisgehäuse 13 gehalten. Andererseits weist der Führungsschenkel 31 eine Führungsnut 33 auf, in der ein Tragstift 34 verschiebbar gehalten ist.

Aus der Darstellung gemäß Fig. 2 wird deutlich, dass der in die Führungsnut 33 eingreifende Tragstift 34 andererseits eine Durchlassöffnung 35 im Querträger 25 der Stützeinheit 12 durchgreift und hier eine formschlüssige Stellverbindung vorgesehen sein kann. Diese Stellverbindung ist in zweckmäßiger Ausführung als eine Schraubverstellung ausgebildet, wobei denkbar ist, dass der ein Gewinde aufweisende Tragstift 34 in einer Gewindebohrung verlagert werden kann.

Die weiteren Verbindungskomponenten sind so aufgebaut, dass der Tragstift 34 im Bereich der im Führungsschenkel 31 vorgesehenen Führungsnut 33 eine Sicherungsmutter 36 als Gleit- und Anschlagteil aufweist. Dieser Teil kann mit der im Bereich der Durchlassöffnung 35 vorgesehenen Gewindeverbindung zusammenwirken.

Ausgehend von dieser Wirkverbindung ist vorgesehen, dass der Tragstift 34 bei Betätigung eines endseitig frei zugänglichen Schraubstellers 37 axial verlagert werden kann (Pfeil T). Dabei ist es möglich, unterschiedliche Positionen im Bereich des Führungsschenkels 31 vorzugeben, da dieser im Querschnitt mit einer Bogenkontur BK geformt ist. Ebenso ist denkbar, dass der Führungsschenkel 31 im Querschnitt als ein gerades Teil geformt ist (nicht dargestellt).

Eine weitere, nicht dargestellte Ausführung sieht vor, dass für die vorbeschriebene indirekte Verstellung des Bodenabstands A im Bereich des Schraubverstellers 37 auch ein motorischer Antrieb installiert werden kann.

## Patentansprüche

1. Gartenpflegegerät in Form eines Vertikutierers, eines Mulchmähers o. dgl. von Hand im Bereich eines einen Bedienhebel (3) aufweisenden Führungsholms (2) steuerbare Einrichtung (1), wobei zumindest ein mittels eines Motors (4) antreibbares Bearbeitungswerkzeug (5) in eine bodennahe Arbeitsstellung bringbar und durch Betätigung einer Kupplung (K) in Rotation versetzbar ist, wobei das Gerät (1) in Form einer zwei beabstandete Radachsen (6, 7) aufweisenden Rolleinrichtung ausgebildet ist, deren mit einer ersten Radachse (6) versehene vordere Stützeinheit (12) relativ zu einem die zweite Radachse (7) sowie die Antriebstruktur (4) aufweisenden Basisgehäuse (13) um eine gemeinsame Querachse (14) verlagerbar ist, wobei mittels einer zwischen Basisgehäuse (13) und vorderer Stützeinheit (12) vorgesehenen Einstellvorrichtung (30) ein jeweiliger, als Arbeitstiefe definierbarer Bodenabstand (A) im Bereich des Bearbeitungswerkzeuges (5) veränderbar ist, **dadurch gekennzeichnet, dass** die Einstellvorrichtung (30) einen Führungsschenkel (31) aufweist und der Führungsschenkel (31) der Einstellvorrichtung (30) im Querschnitt mit einer Bogenkontur (BK) geformt ist..

2. Gartenpflegegerät nach Anspruch 1, **dadurch gekennzeichnet, dass** der Bodenabstand (A) durch eine Verlagerung der vorderen Stützeinheit (12) relativ zur gemeinsamen Querachse (14) einstellbar ist.

3. Gartenpflegegerät nach Anspruch 1 oder 2, **dadurch gekennzeichnet, dass** zur Veränderung des Bodenabstandes (A) die vordere Radachse (6) in Bezug auf die bei Verlagerung um die Querachse (14) gebildete Schwenkbahn der Stützeinheit (12) tangential verschiebbar ist.

4. Gartenpflegegerät nach einem der Ansprüche 1 bis 3, **dadurch gekennzeichnet, dass** die Arbeitstiefe stufenlos einstellbar ist.

5. Gartenpflegegerät nach einem der Ansprüche 1 bis 4, **dadurch gekennzeichnet, dass** die Einstellvorrichtung (30) im Bereich eines die vordere Radachse (6) bildenden Querträgers (25) mit einem Führungsschenkel (31) versehen ist, der einerseits ortsfest am Basisgehäuse (13) gehalten ist und andererseits eine Führungsnut (33) mit einem darin verschiebbaren Tragstift (34) aufweist.

6. Gartenpflegegerät nach Anspruch 5, **dadurch gekennzeichnet, dass** der in die Führungsnut (33) eingreifende Tragstift (34) andererseits eine Durchlassöffnung (30) im Querträger (25) der Stützeinheit (12) durchgreift und hier eine formschlüssige Stellverbindung vorgesehen ist.

7. Gartenpflegegerät nach Anspruch 6, **dadurch gekennzeichnet, dass** die Stellverbindung als eine Schraubverstellung ausgebildet ist, wobei der ein Gewinde aufweisende Tragstift (34) in einer Gewindebohrung verlagerbar ist.

8. Gartenpflegegerät nach einem der Ansprüche 5 bis 7, **dadurch gekennzeichnet, dass** der Tragstift (34) im Bereich der im Führungsschenkel (31) vorgesehenen Führungsnut (33) eine Sicherungsmutter (36) als Gleit- und Anschlagteil aufweist und dieser mit der im Bereich der Durchlassöffnung (35) vorgesehenen Gewindeverbindung zusammenwirkt.

9. Gartenpflegegerät nach einem der Ansprüche 5 bis 8, **dadurch gekennzeichnet, dass** der Tragstift (34) bei Betätigung eines endseitig frei zugänglichen Schraubstellers (37) axial verlagerbar (bei T) ist.

10. Gartenpflegegerät nach einem der Ansprüche 1 bis 9, **dadurch gekennzeichnet, dass** zur Verstellung des Bodenabstands (A) im Bereich des Schraubverstellers (37) ein motorischer Antrieb vorgesehen ist.

## Claims

1. A garden care device in the form of a scarifier, a mulching mower, or similar device (1) controllable by hand in the region of a guide rail (2) having an operating lever (3), wherein at least one processing tool (5) drivable by means of a motor (4) is movable into a ground-level working position and is settable into rotation by actuating a clutch (K), wherein the device (1) is designed in the form of a rolling device having two spaced-apart wheel axles (6, 7), the front support unit (12) of which, which is provided with a first wheel axle (6), being displaceable relative to a base housing (13) having the second wheel axle (7) and the drive structure (4) about a shared transverse axis (14), wherein a respective ground clearance (A) definable as a working depth is changeable in the region of the processing tool (5) by means of an adjustment device (30) provided between base housing (13) and front support unit (12), **characterized in that** the adjustment device (30) has a guide leg (31) and **in that** the guide leg (31) of the adjustment device (30) is formed having a curved contour (BK) in cross section.

2. The garden care device as claimed in claim 1, **characterized in that** the ground clearance (A) is adjustable by a displacement of the front support unit (12) relative to the shared transverse axis (14).

3. The garden care device as claimed in claim 1 or 2, **characterized in that**, to change the ground clearance (A), the front wheel axle (6) is tangentially displaceable in relation to the pivot path of the support unit (12) formed upon displacement about the transverse axis (14).

4. The garden care device as claimed in any one of claims 1 to 3, **characterized in that** the working depth is continuously adjustable.

5. The garden care device as claimed in any one of claims 1 to 4, **characterized in that** the adjustment device (30) is provided in the region of a crossbeam (25) forming the front wheel axle (6) with a guide leg (31), which is held fixed in place on the base housing (13), on the one hand, and has a guide groove (33) having a support pin (34) displaceable therein, on the other hand.

6. The garden care device as claimed in claim 5, **characterized in that** the support pin (34) engaging in the guide groove (33) engages through a passage opening (30) in the crossbeam (25) of the support unit (12), on the other hand, and a formfitting positioning connection is provided here.

7. The garden care device as claimed in claim 6, **characterized in that** the positioning connection is designed as a screw adjustment, wherein the support pin (34), which has a thread, is displaceable in a threaded hole.

8. The garden care device as claimed in any one of claims 5 to 7, **characterized in that** the support pin (34) has a lock nut (36) as a sliding and stop part in the region of the guide groove (33) provided in the guide leg (31) and this lock nut interacts with the threaded connection provided in the region of the passage opening (35).

9. The garden care device as claimed in any one of claims 5 to 8, **characterized in that** the support pin (34) is axially displaceable (at T) upon actuation of a screw adjuster (37) which is freely accessible at the end.

10. The garden care device as claimed in any one of claims 1 to 9, **characterized in that** a motorized drive is provided for adjustment of the ground clearance (A) in the region of the screw adjuster (37).

## Revendications

1. Appareil de jardinage en forme de scarificateur, de tondeuse hacheuse ou de dispositif (1) similaire pouvant être commandé à la main dans la zone d'un guidon (2) présentant un levier de commande (3), dans lequel au moins un outil de travail (5) pouvant être entraîné au moyen d'un moteur (4) peut être amené dans une position de travail proche du sol et peut être mis en rotation par actionnement d'un embrayage (K), dans lequel l'appareil (1) est réalisé en forme de dispositif roulant présentant deux essieux (6, 7) espacés, dont l'unité de support avant (12) dotée d'un premier essieu (6) est déplaçable par rapport à un boîtier de base (13) présentant le deuxième essieu (7) ainsi que la structure d'entraînement (4) autour d'un axe transversal commun (14), dans lequel une distance au sol (A) respective, pouvant être définie en tant que profondeur de travail, dans la zone de l'outil de travail (5) est modifiable au moyen d'un dispositif de réglage (30) prévu entre le boîtier de base (13) et l'unité de support avant (12), **caractérisé en ce que** le dispositif de réglage (30) présente une branche de guidage (31) et la branche de guidage (31) du dispositif de réglage (30) est formée dans la coupe transversale avec un contour en arc (BK).

2. Appareil de jardinage selon la revendication 1, **caractérisé en ce que** la distance au sol (A) est réglable par un déplacement de l'unité de support avant (12) par rapport à l'axe transversal commun (14).

3. Appareil de jardinage selon la revendication 1 ou 2, **caractérisé en ce que** pour modifier la distance au sol (A), l'essieu avant (6) peut être déplacé de manière tangentielle par rapport à la trajectoire de pivotement de l'unité de support (12) formée lors du déplacement autour de l'axe transversal (14).

4. Appareil de jardinage selon l'une quelconque des revendications 1 à 3, **caractérisé en ce que** la profondeur de travail est réglable en continu.

5. Appareil de jardinage selon l'une quelconque des revendications 1 à 4, **caractérisé en ce que** le dispositif de réglage (30) est doté dans la zone d'une traverse (25) formant l'essieu avant (6) d'une branche de guidage (31), qui est maintenue d'un côté de manière stationnaire sur le boîtier de base (13) et présente de l'autre côté une rainure de guidage (33) avec une broche de support (34) qui y est déplaçable.

6. Appareil de jardinage selon la revendication 5, **caractérisé en ce que** la broche de support (34) s'engageant dans la rainure de guidage (33) passe d'autre part à travers une ouverture de passage (30) dans la traverse (25) de l'unité de support (12) et une liaison de réglage par complémentarité de forme est prévue ici.

7. Appareil de jardinage selon la revendication 6, **caractérisé en ce que** la liaison de réglage est réalisée en tant que réglage à vis, dans lequel la broche de support (34) présentant un filet est déplaçable dans un trou taraudé.

8. Appareil de jardinage selon l'une quelconque des revendications 5 à 7, **caractérisé en ce que** la broche de support (34) présente dans la zone de la rainure de guidage (33) prévue dans la branche de guidage (31) un écrou de blocage (36) en tant qu'élément de glissement et de butée et celui-ci interagit avec la liaison filetée prévue dans la zone de l'ouverture de passage (35).

9. Appareil de jardinage selon l'une quelconque des revendications 5 à 8, **caractérisé en ce que** la broche de support (34) est déplaçable axialement (en T) lors de l'actionnement d'un élément de réglage à vis (37) librement accessible côté extrémité.

10. Appareil de jardinage selon l'une quelconque des revendications 1 à 9, **caractérisé en ce qu'**un entraînement par moteur est prévu pour le réglage de la distance au sol (A) dans l'élément de réglage à vis (37).
